# EUROPÄISCHE PATENTSCHRIFT

(11) **EP 2 729 337 B1**
(45) Veröffentlichungstag und Bekanntmachung des Hinweises auf die Patenterteilung: **06.07.2016**
(21) Anmeldenummer: 12712934.4
(22) Anmeldetag: 15.03.2012
(51) Int. Cl.: B60W 30/02, B60W 40/114, B60W 10/06, B60W 10/184, B60W 50/00

(54) **EINRICHTUNG SOWIE VERFAHREN ZUR REGELUNG DER FAHRDYNAMIK EINES FAHRZEUGS SOWIE FAHRZEUG MIT EINER DERARTIGEN EINRICHTUNG**
DEVICE AND METHOD FOR CONTROLLING THE DRIVING DYNAMICS OF A VEHICLE AND VEHICLE HAVING SUCH A DEVICE
DISPOSITIF ET PROCÉDÉ DE RÉGULATION DE LA DYNAMIQUE DE MOUVEMENT D'UN VÉHICULE ET VÉHICULE PRÉSENTANT UN TEL DISPOSITIF

(30) Priorität: 05.07.2011 DE 102011106666; 18.08.2011 DE 102011111012; 06.10.2011 DE 102011114977
(43) Veröffentlichungstag der Anmeldung: 14.05.2014
(73) Patentinhaber: WABCO GmbH, 30453 Hannover (DE)
(72) Erfinder: GRÖGER, Jens, 30449 Hannover (DE); STRACHE, Wolfgang, 30966 Hemmingen (DE)
(74) Vertreter: Lauerwald, Jörg
(86) Internationale Anmeldenummer: PCT/EP2012/001152
(87) Internationale Veröffentlichungsnummer: WO 2013/004318

(56) Entgegenhaltungen:
- EP-A2- 1 118 519
- EP-A2- 1 584 545
- DE-A1- 19 716 391
- DE-A1-102009 013 895

## Beschreibung

Die Erfindung betrifft eine Einrichtung zur Regelung der Fahrdynamik eines Fahrzeugs, insbesondere eines Nutzfahrzeugs, mit einer federnd gegenüber einem Rahmen des Fahrzeugs gelagerten Fahrerkabine gemäß dem Oberbegriff von Anspruch 1. Ferner betrifft die Erfindung ein Fahrzeug mit einer derartigen Einrichtung. Schließlich betrifft die Erfindung ein Verfahren zum Regeln der Fahrdynamik eines derartigen Fahrzeugs gemäß dem Oberbegriff von Anspruch 11.

Herkömmlicherweise wird bei Fahrzeugen eine Fahrdynamikregelung vorgesehen, welche durch gezieltes Abbremsen einzelner Räder ein Ausbrechen des Fahrzeugs verhindern soll. Bei Nutzfahrzeugen wird die notwendige Sensoreinheit üblicherweise am Fahrzeugrahmen verbaut, ebenso wie eine entsprechende Steuereinheit. Es besteht ein Bedarf, die Komponenten günstiger herzustellen und einer einfacheren Montage zugänglich zu machen. Daher besteht ein Wunsch, die Sensoreinheit und die Steuereinheit zu integrieren und in der Fahrerkabine des Fahrzeugs einzubauen. Hierbei ergibt sich jedoch das Problem, dass die Fahrerkabine federnd am Fahrzeugrahmen angebracht ist und somit Bewegungen gegenüber dem Fahrzeugrahmen vollführt. Als Folge hiervon entsteht ein 2-Feder-Masse-System, wobei ein erstes Feder-Masse-Teilsystem von der Kabine sowie deren federnder Lagerung gebildet wird und ein zweites Feder-Masse-Teilsystem vom Fahrzeugrahmen und der Radaufhängung gebildet wird.

Die Fahrdynamikregelung zielt herkömmlicherweise darauf ab, die Zustände am Fahrzeugrahmen zu erfassen, insbesondere die Gierrate am Fahrzeugrahmen, um ggf. stabilisierend eingreifen zu können, falls die gemessene Gierrate nicht mit der Soll-Gierrate übereinstimmt, die sich aus dem Lenkwinkel und der Fahrzeuggeschwindigkeit ergibt. Eine Messung der Gierrate in der Fahrerkabine führt jedoch aufgrund der federnden Aufhängung der Kabine gegenüber dem Fahrzeugrahmen zu fehlerhaften Messwerten.

Ein erstes Beispiel für eine derartige Fehlerquelle ist, dass die Kabine aufgrund einer 4-Punkte-Aufhängung Taumelbewegungen vollführen kann, so dass ein in der Kabine angeordneter Gierratensensor ein Signal liefern würde, obwohl keine Drehung des Fahrzeugrahmens um seine Hochachse erfolgt. Derartige Signale eines Gierratensensors führen daher zu ggf. fehlerhaften Eingriffen in die Bremsanlage des Fahrzeugs bzw. des Antriebs des Fahrzeugs.

Ein weiteres Beispiel für eine Fehlerquelle ist, dass die Fahrerkabine bei einem Bremsmanöver nach vorne kippt. Damit steht die Achse eines in der Fahrzeugkabine angeordneten Gierratensensors schräg, so dass das Sensorsignal eines Gierratensensors zu klein gemessen würde. Ein derartiger Fehler ist besonders gefährlich, da somit einem Ausbrechen des Fahrzeugs zu spät entgegengewirkt werden könnte, so dass es möglicherweise zu einem Unfall kommen kann.

Aus DE 10 2009 013 895 A1 ist eine gattungsgemäße Einrichtung bzw. ein gattungsgemäßes Verfahren bekannt. DE10 2009 013 895 A1 schlägt jedoch vor, Signale, die auf ein Schwingen der Fahrerkabine zurückzuführen sind, auszufiltern und nicht als Messsignale innerhalb der Fahrdynamikregelung zu verwenden. Nachteilig hieran ist jedoch, dass im Falle eines Schwingens der Fahrerkabine keine brauchbaren Gierrateninformationen bezüglich des Fahrzeugrahmens vorliegen, so dass eine zuverlässige Fahrdynamikregelung nicht gewährleistet ist.

Der Erfindung liegt daher die Aufgabe zugrunde, die Fahrdynamikregelung trotz einer Anordnung des benötigen Gierratensensors in der Fahrerkabine zu verbessern.

Die Erfindung löst diese Aufgabe mit einer Einrichtung zur Regelung der Fahrdynamik eines Fahrzeugs, insbesondere eines Nutzfahrzeugs mit den Merkmalen von Anspruch 1 sowie mit einem Fahrzeug gemäß Anspruch 10, welches eine derartige Einrichtung aufweist. Ferner löst die Erfindung dieses Problem mit einem entsprechenden Verfahren zum Regeln der Fahrdynamik eines Fahrzeugs mit den Merkmalen von Anspruch 11.

Erfindungsgemäß ist daher vorgesehen, dass eine Einrichtung zur Regelung der Fahrdynamik eines Fahrzeugs mit einer federnd gegenüber einem Rahmen des Fahrzeugs gelagerten Fahrerkabine Lenkwinkelsensormittel zum Messen eines Lenkwinkels, Gierratensensormittel zum Messen einer Gierrate der Fahrerkabine, weitere Sensormittel zum Ermitteln einer Auslenkung der Fahrerkabine aus einer Referenzposition und eine Steuereinheit zur Auswertung der von den Sensormitteln gelieferten Signalen und zur Beeinflussung einer Bremsanlage und/oder eines Antriebs des Fahrzeugs in Abhängigkeit von diesen Signalen aufweist. Dabei sind die Gierratensensormittel, vorzugsweise aber auch die Steuereinheit und ggf. auch die Lenkwinkelsensormittel, in der Fahrerkabine angeordnet. Mittels der Steuereinheit wird eine Gierrate des Fahrzeugrahmens in Abhängigkeit von der Gierrate der Fahrerkabine sowie der Auslenkung der Fahrerkabine aus ihrer Referenzposition geschätzt bzw. berechnet.

Unter dem Begriff "Schätzen" wird im vorliegenden Zusammenhang die näherungsweise Bestimmung einer Größe, wie z.B. der Gierrate, unter Anwendung rechnerischer mathematischer Methoden verstanden, d.h. eine Schätzung im mathematischen Sinne und nicht im umgangssprachlichen Sinne nach Art einer Bestimmung einer Größe durch Intuition. Derartige mathematische Methoden basieren auf komplexen Modellen, wie bspw. dem Beobachtermodell, und erfordern daher auch den Einsatz von Rechnern. Daher beinhaltet der Begriff des Schätzens vorliegend auch ein Berechnen, so dass die Formulierung "Schätzen bzw. Berechnen" verwendet wird.

EP 1 584 545 A2 offenbart eine Aufhängung für eine Fahrerkabine eines Nutzfahrzeuges, mit wenigstens drei fluidisch wirkenden Tragelementen, die zwischen der Fahrerkabine und einem Fahrgestellrahmen angeordnet und die jeweils separat in ihrem Hub bzw. in ihrer Feder- und/oder Dämpfungscharakteristik einstellbar sind. Es ist vorgesehen, dass eine annähernd horizontale Ausrichtung der Fahrerkabine im Stillstand des Nutzfahrzeuges durch eine Einstellung des jeweiligen Hubs wenigstens eines der wenigstens drei Tragelemente und/oder von Aufhängungselementen eines Fahrwerks des Nutzfahrzeuges realisierbar ist.

Weiterhin betrifft die Schrift eine Aufhängung für eine Fahrerkabine eines Nutzfahrzeuges, wobei Nick- und/oder Rollbewegungen der Fahrerkabine aufgrund von Fahrzustandsänderungen mittels einer Verstellung einer Federungs- und/oder Dämpfungscharakteristik wenigstens eines der Tragelemente weitgehend ausgleichbar bzw. zumindest dämpfbar sind. Hierbei ist vorgesehen, dass die Fahrzustandsänderungen des Nutzfahrzeuges aus den Ausgangssignalen wenigstens eines Beschleunigungssensors, aus den Ausgangssignalen eines Fahrgeschwindigkeitsensors und/oder aus den Ausgangssignalen eines Lenkwinkelsensors ableitbar sind.

Die Bremsanlage bzw. der Antrieb des Fahrzeugs wird beeinflusst, wenn die Differenz zwischen der geschätzten bzw. berechneten Gierrate und einer Soll-Gierrate des Fahrzeugrahmens über einem vorgegebenen Grenzwert liegt, wobei die Soll-Gierrate von der Steuereinheit wenigstens in Abhängigkeit von dem gemessenen Lenkwinkel und der auf den Fahrzeugrahmen bezogenen Fahrzeuggeschwindigkeit und ggf. weiteren Bewegungsparametern, wie der Querbeschleunigung des Fahrzeugrahmens, und/oder Fahrparametern, wie einem Verzögerungssignal bzw. Bremswunsch oder Bremsdruck, ermittelt wird.

Es ist vorteilhaft, wenn ein Regeleingriff nur dann erfolgt, wenn die Differenz zwischen der geschätzten bzw. berechneten Gierrate und der Soll-Gierrate einen Grenzwert überschreitet, um die benötigten Querkräfte bei einer Kurvenfahrt durch die Reifen des Fahrzeugs aufbauen zu können.

Erfindungsgemäß kann auf die Messung der Gierrate am Fahrzeugrahmen verzichtet werden. Dies ist vorteilhaft, da am Fahrzeugrahmen üblicherweise nur recht wenig Platz für entsprechende Komponenten zur Verfügung steht und zudem am Fahrzeugrahmen angebrachte Komponenten besonders vor Feuchtigkeit, Hitze, Kälte, Staub und Schmutz geschützt werden müssen. Ein derartiger besonderer Schutz entfällt weitgehend, wenn die entsprechenden Komponenten in der Fahrerkabine angeordnet werden. Zudem entfällt eine aufwendige Verkabelung von am Fahrzeugrahmen angeordneten Komponenten bei einer Anordnung dieser Komponenten in der Fahrerkabine.

Erfindungsgemäß kann jedoch trotz der Messung der Gierrate in der Fahrerkabine eine Gierrate am Fahrzeugrahmen durch Schätzung bzw. Berechnung ermittelt werden. Die Erfindung hat nämlich erkannt, dass von einer auf die Fahrerkabine bezogenen Gierrate auf eine auf den Fahrzeugrahmen bezogene Gierrate geschlossen werden kann, obwohl sich aufgrund der federnden Lagerung der Fahrerkabine am Fahrzeugrahmen die Fahrerkabine und der Fahrzeugrahmen unterschiedlich verhalten.

Die Bereitstellung einer Gierrate bezogen auf den Fahrzeugrahmen ist vorteilhaft, da sich problematische Fahrzustände, wie ein Ausbrechen oder Schleudern, vor allem am Fahrzeugrahmen einstellen. Daher wird eine auf den Fahrzeugrahmen bezogene Gierrate auch dann benötigt, wenn sie nicht gemessen werden kann. Durch die erfindungsgemäße Bereitstellung einer derartigen auf den Fahrzeugrahmen bezogene Gierrate kann die Fahrdynamikregelung zu allen Zeiten, auch im Falle eines Schwingens bzw. Nickens oder Wankens der Fahrerkabine erfolgreich durchgeführt werden.

Gemäß einer besonderen Ausführungsform sind die weiteren Sensormittel wenigstens eines weiteren Steuer- oder Regelsystems des Fahrzeugs, das einer anderen Funktion als der Fahrdynamikregelung dient, wobei die weiteren Sensormittel zusätzlich weitere Fahrzeug- und/oder Fahrzeugumgebungs- und/oder Fahrzeugbewegungsdaten und/oder -parameter erfassen. Bei derartigen weiteren Steuer- oder Regelsystemen handelt es sich in erster Linie um Fahrerassistenzsysteme, wie beispielsweise ein Spurhalteassistenzsystem, ein Abstandswarnsystem oder auch um ein Getriebesteuerungssystem. Daher können die weiteren Sensormittel bevorzugt eine oder zwei Kameras, ein Radar, ein Lidar und/oder einen Beschleunigungssensor, insbesondere zum Erfassen von Beschleunigungen in Fahrzeuglängsrichtung, im bzw. am Getriebe umfassen. Diese Sensormittel generieren Bilddaten bzw. Abstandsdaten und bevorzugt Fahrzeuglängsbeschleunigungsdaten. Bei der Verwendung derartiger zusätzlicher Sensormittel sind keine zusätzlichen Sensoren für die Schätzung bzw. Berechnung der Gierrate am Fahrzeugrahmen erforderlich. Somit ergibt sich eine besonders kostengünstige Lösung.

Gemäß einer weiteren besonderen Ausführungsform erfassen die weiteren Sensormittel - bis auf den Beschleunigungssensor - einen Ausschnitt der Umgebung des Fahrzeugs von der Fahrerkabine aus, wobei die Steuereinheit aus einer Veränderung des erfassten Ausschnitts die Auslenkung der Fahrerkabine ermittelt. Dies ist vorteilhaft, da somit die Bewegung der Fahrerkabine gegenüber der Umgebung erkennbar ist. Unter der Annahme, dass der Fahrzeugrahmen gegenüber der Fahrbahn im Wesentlichen parallel verbleibt, kann aus einer derartigen Veränderung des erfassten Ausschnitts der Auslenkung der Fahrerkabine eine Bewegung der Fahrerkabine gegenüber dem Fahrzeugrahmen und somit eine Auslenkung der Fahrerkabine aus ihrer Referenzposition ermittelt werden.

Bei einer weiteren besonderen Ausführungsform erfassen die weiteren Sensormittel von einer starr mit der Fahrerkabine verbundenen Position aus den Rahmen oder starr mit dem Rahmen verbundene Aufbauten. Zusätzlich oder alternativ erfassen die weiteren Sensormittel von einer starr mit dem Rahmen verbundenen Position aus die Fahrerkabine. Dabei ermittelt die Steuereinheit aus einer Veränderung von Positionen jeweils erfasster Objekte die Auslenkung der Fahrerkabine. Bei dieser Ausgestaltung sind die weiteren Sensormittel bevorzugt Kameramittel oder andere bildgebende Sensoren, wie Radarsensoren oder Lidarsensoren. Auf diese Weise kann direkt die Relativbewegung der Kabine gegenüber dem Fahrzeugrahmen erfasst werden, was eine Schätzung bzw. Berechnung der Gierrate am Fahrzeugrahmen aus der in der Fahrerkabine gemessenen Gierrate erleichtert.

Gemäß einer weiteren Ausführungsform erfassen die weiteren Sensormittel eine Beschleunigung des Fahrzeugs am Fahrzeugrahmen in Fahrtrichtung und/oder quer zur Fahrtrichtung, wobei die Steuereinheit unter Berücksichtigung dieser Beschleunigung und/oder des gemessenen Lenkwinkels sowie der Masse der Fahrerkabine sowie der Feder- und Dämpfungseigenschaften der federnden Lagerung der Fahrerkabine am Fahrzeugrahmen die Auslenkung der Fahrerkabine schätzt bzw. berechnet. Aus einer gemessenen Beschleunigung des Fahrzeugs bezogen auf den Fahrzeugrahmen in Fahrtrichtung, wobei auch negative Beschleunigungen, d.h. Verzögerungen, eingeschlossen sind, kann auf ein Nicken der Fahrerkabine geschlossen werden. In entsprechender Weise kann aus dem Lenkwinkel sowie der Fahrzeuggeschwindigkeit auf ein Wanken bzw. seitliches Wegkippen der Fahrerkabine geschlossen werden, wenn die Masse der Fahrerkabine ebenso wie ihre Feder- und Dämpfungseigenschaften bekannt sind. Somit kann mit geringem Installationsaufwand und Gerätaufwand eine Auslenkung der Fahrerkabine aus ihrer Referenzposition geschätzt bzw. berechnet werden und zwar in Fahrzeuglängs- und/oder Fahrzeugquerrichtung.

Vorteilhafterweise erfolgt eine Ermittlung der Masse der Fahrerkabine mittels entsprechender Sensoren zur Messung der Fahrerkabinenmasse. Beispielsweise können hierbei Dehnungsmessstreifen oder andere eine Kraft bestimmende Sensoren verwendet werden. Derartige Sensoren erlauben eine präzise Massenbestimmung. Die Ermittlung der Masse der Fahrerkabine ist deshalb sinnvoll, da sie nicht konstant ist. Insbesondere kann durch ein- bzw. aussteigende Beifahrer bzw. Mitfahrer und durch Be- und Entladen von Gepäck die Masse der Fahrerkabine signifikant beeinflusst werden.

Gemäß einer weiteren besonderen Ausführungsform wird die Masse der Fahrerkabine durch Schätzung bzw. Berechnung ermittelt. Hierzu ermittelt die Steuereinheit, insbesondere während eines Anfahrvorganges, eine Abweichung der Beschleunigung des Rahmens von einer zeitgleich gemessenen Beschleunigung der Fahrerkabine. Aufgrund der Massenträgheit und der federnden Lagerung der Fahrerkabine ergibt sich ein vom Fahrzeugrahmen abweichendes Beschleunigungsverhalten, welches abhängig von der Masse ist. Diese Abweichung wertet die Steuereinheit aus, um somit die Masse der Fahrerkabine festzustellen. Hierzu eignet sich insbesondere ein Anfahrvorgang aus dem Stillstand, da dann regelmäßig keine zusätzlichen Störgrößen die Massenschätzung bzw. - berechnung verfälschen. Diese Massenschätzung bzw. -berechnung ist vorteilhaft, da somit kein zusätzlicher Massesensor bzw. Gewichtssensor für die Fahrerkabine nötig ist.

Vorteilhafterweise kann die Beschleunigung des Rahmens aus den Raddrehzahländerungen ermittelt werden, wozu Signale von Drehzahlsensoren an den Rädern des Fahrzeugs verarbeitet werden. Zusätzlich oder alternativ können Signale eines oder mehrerer Beschleunigungssensoren herangezogen werden, die am Rahmen oder in am Rahmen angeordneten Komponenten angeordnet sind. Beispielsweise kann ein im Fahrzeuggetriebe angeordneter Beschleunigungssensor zur Ermittlung der Beschleunigung des Rahmens verwendet werden. Die Beschleunigung der Fahrerkabine wird vorzugsweise durch einen in oder an der Fahrerkabine angeordneten Beschleunigungssensor bestimmt.

Gemäß einer weiteren besonderen Ausführungsform sind die Gierratensensormittel und die Steuereinheit sowie vorzugsweise auch die Lenkwinkelsensormittel in einer gemeinsamen Baueinheit angeordnet, während die weiteren Sensormittel außerhalb dieser gemeinsamen Baueinheit vorgesehen sind. Dies ist vorteilhaft, da eine Trennung der weiteren Sensormittel von den Gierratensensormitteln, insbesondere auch eine beabstandete Anordnung dieser Mittel, die Erfassung signifikant unterschiedlicher Größen ermöglicht. Hiermit wird die Ermittlung der Kabinenbewegung bzw. der Auslenkung der Kabine von ihrer Referenzposition vereinfacht und verbessert.

Gemäß einer weiteren vorteilhaften Ausführungsform umfasst die Steuereinheit einen Beobachter. Der Begriff "Beobachter" stammt aus der Regelungstechnik und bezeichnet ein System, das unter Verwendung eines Modells aus bekannten Eingangsgrößen eine nicht messbare Größe rekonstruiert. Vorteilhafterweise ist der Beobachter als Hard- und/oder Softwarekomponente ausgebildet. Gemäß dieser Ausführungsform schätzt bzw. berechnet der Beobachter die Gierrate am Fahrzeugrahmen in Abhängigkeit vom Lenkwinkel, der Fahrzeuggeschwindigkeit bezogen auf den Fahrzeugrahmen, der Auslenkung der Fahrerkabine aus ihrer Referenzposition, ggf. auch der Geschwindigkeit und/oder Beschleunigung der Kabinenauslenkung, jeweils bevorzugt um die Fahrzeugquerachse und die Fahrzeuglängsachse, und einem beispielsweise mittels einer Rückführfunktion bewerteten Schätzfehler in Form der Differenz aus der gemessenen Gierrate der Fahrerkabine und einer mittels eines mathematischen Modells geschätzten bzw. berechneten Gierrate der Fahrerkabine. Ein derartiger Beobachter erlaubt auf besonders effiziente Weise die Gierrate am Fahrzeugrahmen zu schätzen bzw. zu berechnen.

Weitere vorteilhafte Ausführungsformen der Erfindung ergeben sich aus den Unteransprüchen sowie aus den Ausführungsbeispielen, die nachfolgend anhand der Zeichnung näher erläutert sind. In der Zeichnung zeigen:
- Fig. 1: eine stark vereinfachte Prinzipdarstellung eines Nutzfahrzeugs mit einer auf einem Fahrzeugrahmen federnd gelagerten Fahrerkabine in einer Seitenansicht;
- Fig. 2: das Fahrzeug gemäß Fig. 1 in einer Ansicht von vorn;
- Fig. 3: ein Blockschaltbild einer Einrichtung zur Regelung der Fahrdynamik eine Fahrzeugs gemäß einem Ausführungsbeispiel der Erfindung;
- Fig. 4A: ein Kamerabild einer an der Fahrerkabine angebrachten Kamera in einer Referenzposition der Fahrerkabine aus der Referenzposition gemäß Fig. 1,
- Fig. 4B: ein Kamerabild einer an der Fahrerkabine angebrachten Kamera bei einer Auslenkung der Fahrerkabine aus der Referenzposition gemäß Fig. 1;
- Fig. 5A: ein Kamerabild einer an der Fahrerkabine angebrachten Kamera in einer Referenzposition der Fahrerkabine aus der Referenzposition gemäß Fig. 2 und
- Fig. 5B: ein Kamerabild einer an der Fahrerkabine angebrachten Kamera bei einer Auslenkung der Fahrerkabine aus der Referenzposition gemäß Fig.2.

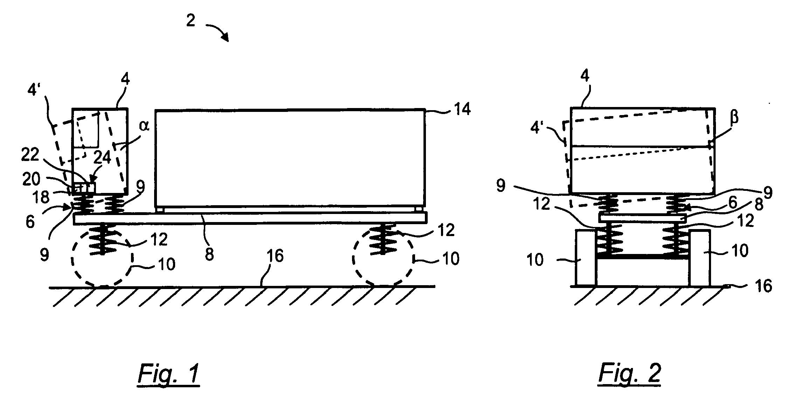

Fig. 1 zeigt ein als Nutzfahrzeug ausgebildetes Fahrzeug 2 in einer stark vereinfachten Darstellung in Seitenansicht. Das Nutzfahrzeug 2 weist eine Fahrerkabine 4 auf, welche mittels einer 4-Punkte-Aufhängung 6 federnd auf einem Fahrzeugrahmen 8 mittels vier Feder-Dämpfer-Anordnungen 9 gelagert ist. Diese Art der Lagerung erhöht den Fahrkomfort für den Fahrer, da sie Fahrbahnunebenheiten dämpft.

An dem Fahrzeugrahmen 8 ist ein Fahrwerk mit mehreren Rädern 10 befestigt, wobei die Rädern 10 mittelbar mit dem Fahrzeugrahmen 8 verbunden sind. Hierzu sind zwischen den Rädern 10 und dem Fahrzeugrahmen 8 in bekannter Weise Feder-Dämpfer-Elemente 12 vorgesehen, die ebenfalls Fahrbahnunebenheiten dämpfen.

Auf dem Fahrzeugrahmen 8 befindet sich regelmäßig ein Aufbau 14 zur Aufnahme von Transportgut.

Die Feder-Dämpfer-Elemente 12 sind derart gewählt, dass der Fahrzeugrahmen 8 auch bei Kurvenfahrten oder hohen Beschleunigungen (womit auch negative Beschleunigungen im Sinne einer Verzögerung erfasst sind) nur unwesentlich geneigt oder gekippt wird. D.h. der Fahrzeugrahmen 8 verbleibt regelmäßig im Wesentlichen parallel zur Fahrbahn 16.

Demgegenüber ist die 4-Punkte-Aufhängung 6 der Fahrerkabine 4 zur Erzielung eines besonderen Komforts für den Fahrer "weicher" ausgelegt, so dass die Fahrerkabine 4 beispielsweise bei einer Abbremsung, d.h. negativen Beschleunigung, um eine Achse in Querrichtung zum Fahrzeug 2 gekippt wird. Man spricht vom sog. "Nicken" der Fahrerkabine. Ein derartiger Zustand der Fahrerkabine ist in Fig. 1 durch eine gestrichelte Fahrerkabine 4' veranschaulicht. Demgegenüber ist die Fahrerkabine 4 in ihrer Referenzposition in ausgezogenen Linien dargestellt. Die Referenzposition ist beispielsweise eine Position, bei der sich eine unbeladene Fahrerkabine auf ebenem Untergrund bei stehendem Fahrzeug befindet.

Fig. 2 veranschaulicht das Fahrzeug gemäß Fig. 1 in einer Ansicht von vorne, wie sie sich typischerweise bei einer Kurvenfahrt ergibt. Während der Fahrzeugrahmen 8 im Wesentlichen weiterhin parallel zur Fahrbahn ausgerichtet ist, kippt die Fahrerkabine 4 - wie durch die gestrichelten Linien veranschaulicht - seitlich, d.h. um eine Achse in Längsrichtung des Fahrzeugs 2, weg. Eine derartige Kabinenbewegung wird mit Wanken bezeichnet.

Die als Nicken bezeichnete Kabinenbewegung gemäß Fig. 1 kann über einen Auslenkwinkel α angegeben werden, welcher beispielsweise durch den Winkel zwischen einer vertikalen Bezugslinie in der Referenzposition und in der ausgelenkten Position beschrieben wird, wie in Fig. 1 gezeigt.

In analoger Weise führt eine Auslenkung der Fahrerkabine aus ihrer Referenzposition um die Längsrichtung zu einem Auslenkwinkel β, wie in Fig. 2 gezeigt.

Erfindungsgemäß ist vorgesehen, wesentliche Komponenten einer Fahrdynamikregelung in der Fahrerkabine 4 unterzubringen. Hierzu zählen insbesondere ein für eine Fahrdynamikregelung benötigter Gierratensensor 18 sowie ein Lenkwinkelsensor 20, die vorzugsweise zusammen mit einer Steuereinheit 22 in einer gemeinsamen Baueinheit 24 angeordnet sind.

Kommt es nunmehr zu einem Nicken oder Wanken der Fahrerkabine 4, ist insbesondere der Gierratensensor 18 nicht mehr in seiner Ursprungsausrichtung und verliert dadurch an Empfindlichkeit. Beispielsweise kann die Empfindlichkeit mit dem Faktor Kosinus α bzw. Kosinus β abnehmen, so dass das mit dem Gierratensensor 18 gemessene Gierratensensorsignal entsprechend verfälscht ist. Dies ist besonders dann nachteilig, wenn der Gierratensensor 18 eine zu geringe Gierrate angibt, da somit eine Fahrdynamikregelung davon ausgehen würde, dass die Gierrate unterhalb eines kritischen Wertes liegt, obwohl sie bereits einen kritischen Wert erreicht hat.

Eine Messung einer Gierrate in der Fahrerkabine 4 ist daher problematisch und bedarf einer Korrektur, so dass letztlich auf eine auf den Fahrzeugrahmen 8 bezogene Gierrate geschlossen werden kann. Erfindungsgemäß ist daher vorgesehen, aus der an der Fahrerkabine 4 gemessenen Gierrate die Gierrate am Fahrzeugrahmen 8 zu schätzen bzw. zu berechnen.

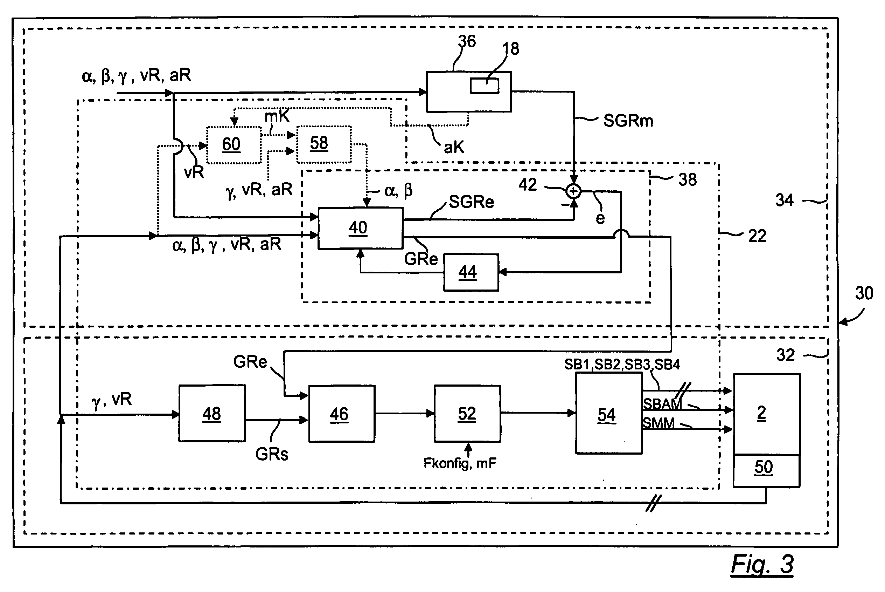

Fig. 3 veranschaulicht ein Blockdiagramm einer Fahrdynamikregeleinrichtung 30, welche neben der eigentlichen Fahrdynamikregelstrecke 32 eine Schätzeinrichtung 34 zum Schätzen bzw. Berechnen der Gierrate am Fahrzeugrahmen 8 aufweist. Die Schätzeinrichtung zum Schätzen bzw. Berechnen der Gierrate umfasst ein reales Meßsystem 36, welches den Gierratensensor 18 und ggf. einen Längs- und/oder Querbeschleunigungssensor aufweist und ein gemessenes Gierratensensorsignal SGRm erzeugt, welches aufgrund der Anordnung des Gierratensensors 18 in der Fahrerkabine 4 von dem Lenkwinkel γ, der Fahrzeuggeschwindigkeit vR sowie der Fahrzeugbeschleunigung aR, wobei diese Größen auf den Fahrzeugrahmen 8 bezogen sind, und den Kabinenauslenkungen α und β sowie der ersten und zweiten zeitlichen Ablenkung der Kabinenauslenkung abhängt. Dieses Gierratensensorsignal SGRm ist somit gegenüber einem am Fahrzeugrahmen 8 gemessenem Gierratensensorsignal verfälscht.

Die Schätzeinrichtung 34 zum Schätzen bzw. Berechnen der Gierrate ermittelt mittels eines als Hard- und/oder Softwarekomponente ausgebildeten Beobachters 38 aus dem in der Fahrerkabine 4 gemessenen Gierratensensorsignal SGRm eine auf den Fahrzeugrahmen 8 bezogene geschätzte bzw. berechnete Gierrate GRe.

Der Beobachter 38 umfasst ein mathematisches Modell 40, um aus dem an der Fahrerkabine 4 gemessenen Gierratensensorsignal SGRm eine Gierrate GRe am Fahrzeugrahmen 8 zu schätzen bzw. zu berechnen. Dieses Modell 40 erhält eingangsseitig Informationen über den Lenkwinkel γ, die Fahrzeuggeschwindigkeit vR, die Fahrzeugbeschleunigung aR sowie die Kabinenbewegungen in Form der Auslenkungen α und β bzw. deren ersten und ggf. zweiten zeitlichen Ableitung. Dieses Modell 40 schätzt bzw. berechnet ein Gierratensensorsignal SGRe unter den jeweils vorliegenden Messgrößen für den Lenkwinkel γ, die Fahrzeuggeschwindigkeit vR, die Fahrzeugbeschleunigung aR sowie die Kabinenbewegungen in Form der Auslenkungen α und β bzw. deren ersten und zweiten zeitlichen Ableitungen. Das somit geschätzte bzw. berechnete Gierratensensorsignal SGRe wird mit dem gemessenen Gierratensensorsignal SGRm verglichen, in dem die Differenz des gemessenen und des geschätzten bzw. berechneten Gierratensensorsignals, nämlich SGRm - SGRe, mittels eines Substrahierers 42 als Schätzfehler e gebildet wird. Der Schätzfehler e wird über eine Rückführfunktion 44, ggf. mit einer Rückführmatrix, bewertet und das Ergebnis dieser Bewertung dem Modell 40 zurückgeführt. Das Modell 44 ist derart eingerichtet, um den Schätzfehler e zu minimieren, so dass das geschätzte bzw. berechnete Gierratensensorsignal SGRe dem verfälschten gemessenen Gierratensensorsignal SGRm angenähert wird. Gleichzeitig generiert das Modell 40 eine geschätzte bzw. berechnete Gierrate GRe am Fahrzeugrahmen 8, welches mittels des realen Meßsystems 36 nicht gemessen werden kann. Der Beobachter 38 liefert auf diese Weise eine geschätzte bzw. berechnete Gierrate bezogen auf den Fahrzeugrahmen 8 und übergibt diese geschätzte bzw. berechnete Gierrate GRe der Fahrdynamikregelstrecke 32 und zwar an einen Block 46, welcher einen Regelfehler ermittelt. Dieser Block 46 erhält ferner eine Soll-Gierrate GRs, welche sich einstellen soll, wenn ein bestimmter Lenkwinkel γ und eine bestimmte Fahrzeuggeschwindigkeit vR vorliegt. Diese Soll-Gierrate GRs wird in einem Referenzmodell 48 ermittelt, welches von entsprechenden Sensoren 50 am Fahrzeug 2 Daten über den Lenkwinkel γ und die Fahrzeuggeschwindigkeit vR erhält.

Der Regelfehlerblock 46 ermittelt aus der geschätzten bzw. berechneten Gierrate GRe und der Soll-Gierrate GRs die Differenz und gibt diese Differenz zumindest dann an den Regler 52 weiter, wenn sie über einem vorgegebenen Grenzwert liegt. Der Regler ermittelt dann unter Berücksichtigung von weiteren Fahrzeugdaten bzw. Fahrzeugparametern, wie der Fahrzeugkonfiguration FKonfig und der Fahrzeugmasse mF, Regelparameter und übergibt diese Regelparameter an einen Block 54, welcher Informationen über eine Eingriffsstrategie enthält und daher als Eingriffsstrategieblock 54 bezeichnet wird. Er ermittelt anhand von Eingriffsstrategieregeln Stellsignale SB1, SB2, SB3, SB4 für insbesondere die Bremsdrücke B1, B2, B3, B4 an den Rädern 10 und ggf. ein Stellsignal SBAH für einen Anhängerbremsdruck sowie ein Stellsignal SMM für ein Antriebssollmoment, welches dem Motor des Fahrzeugs 2 angibt, welches Drehmoment der Motor erzeugen soll. Das Fahrzeug 2 wird somit derart beeinflusst, um einen stabilen Fahrzustand zu behalten.

Die genannten Sensoren 50 überwachen das Fahrzeug 2, um Daten bzw. Parameter über das Fahrzeug bzw. die Fahrzeugbewegung zu erhalten.

Insbesondere liefern die Sensoren 50 Informationen über die Bewegung der Fahrerkabine 4. Diese Informationen werden nicht nur dem Referenzmodell 48, sondern auch dem Modell 40 des Beobachters 38 zugeführt.

Beispielsweise können die Sensoren 50 somit eine oder mehrere Kameras umfassen, welche an der Fahrerkabine 4 angeordnet sind. Eine zugeordnete Bildverarbeitungseinrichtung (nicht dargestellt) ermittelt aus einer Veränderung des von der Kamera beobachteten Ausschnitts die Auslenkwinkel α und β der Kamera.

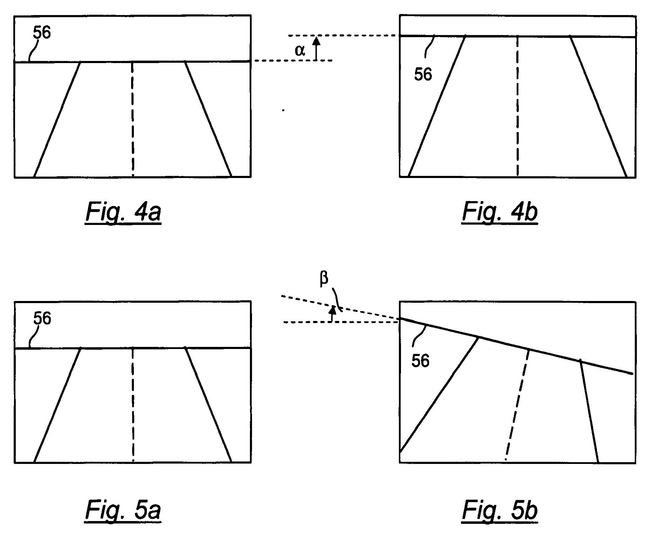

Fig. 4A veranschaulicht das von der Kamera erfasste Straßenbild, wobei Fig. 4A den Ausschnitt zeigt, wenn sich die Fahrerkabine in ihrer Referenzposition befindet.

Fig. 4B veranschaulicht das Kamerabild, wenn die Fahrerkabine um den Winkel α ausgelenkt ist, sowie dies in Fig. 1 veranschaulicht ist. Deutlich zu erkennen ist, wie der Horizont 56 im Kamerabild nach oben gewandert ist. Eine derartige Verschiebung des Ausschnitts des Umgebungsbildes kann mit gängigen Bildverarbeitungsmethoden errechnet werden. Unter Berücksichtigung der Einbauposition der Kamera in der Fahrerkabine erhält man somit den Auslenkwinkel α.

In ähnlicher Weise veranschaulichen Fig. 5A und Fig. 5B eine Veränderung des Kamerabildes im Falle eines Auslenkung der Fahrerkabine, wie in Fig. 2 veranschaulicht. Im Falle einer Auslenkung der Fahrerkabine 4 um den Auslenkwinkel β wird der Horizont 56 verschwenkt. Der entsprechende Schwenkwinkel entspricht dem Auslenkwinkel β. Die Bildverarbeitungseinrichtung kann mit den gängigen Methoden der Bildverarbeitung derartige Verschiebungen errechnen und hieraus auf die Auslenkwinkel α und β der Fahrerkabine schließen.

Anstelle einer Kamera zur Ermittlung der Auslenkung der Fahrerkabine 4 aus ihrer Referenzposition können auch andere Sensoren, wie Radarsensoren oder Lidarsensoren herangezogen werden, welche ebenfalls die Umgebung des Fahrzeugs 2 erfassen und somit Aufschluss geben über etwaige Kabinenbewegungen. Grundsätzlich ist jedweder Sensor zur Erfassung der Umgebung geeignet, der an der Kabine angeordnet ist, um auf Kabinenbewegungen zu schließen.

Darüber hinaus sind jedoch ebenfalls Sensoren geeignet, welche beispielsweise am Rahmen 8 oder am Aufbau 14 angeordnet sind und die Fahrerkabine 4 erfassen, um Kabinenbewegungen zu ermitteln. Ebenso sind Sensoren geeignet, welche an der Fahrerkabine 4 angebracht sind und den Fahrzeugrahmen 8 bzw. den Aufbau 14 erfassen und somit Aufschluss über eine Relativbewegung zwischen Fahrerkabine 4 und Fahrzeugrahmen 8 geben.

Neben der unmittelbaren sensorischen Erfassung der Kabinenbewegung kann die Kabinenbewegung jedoch auch über eine Schätzung bzw. Berechnung ermittelt werden. Die Schätzeinrichtung 34 zum Schätzen bzw. Berechnen der Gierrate GRe umfasst hierzu eine Schätzeinrichtung 58 zum Schätzen bzw. Berechnen der Kabinenbewegung. Soweit dieser Schätzeinrichtung 58 Daten über die Fahrzeuggeschwindigkeit vR, die Fahrzeugbeschleunigung aR sowie den Lenkwinkel γ vorliegen und zudem die Eigenschaften der 4-Punkte-Aufhängung 6 bekannt sind, insbesondere in Bezug auf die Feder- und Dämpfungseigenschaften dieser Aufhängung, und des Weiteren die Masse mK der Kabine bekannt ist, kann die Schätzeinrichtung 58 zum Schätzen bzw. Berechnen der Kabinenbewegung die Kabinenbewegung schätzen bzw. berechnen.

Darüber hinaus kann auch die Kabinenmasse mK mittels einer weiteren Schätzeinrichtung 60 zum Schätzen bzw. Berechnen der Kabinenmasse mK geschätzt bzw. berechnet werden. Die Schätzeinrichtung 60 benötigt hierzu Werte der Kabinenbeschleunigung aK und der Fahrzeugbeschleunigung aR bezogen auf den Fahrzeugrahmen 8. Insbesondere beim Anfahren aus dem Stillstand wird die Kabinenbeschleunigung aK geringer sein als die Fahrzeugbeschleunigung aR, so dass aus dieser Differenz auf die Kabinenmasse mK geschlossen werden kann. Die Kabinenmasse muss somit nicht zwangsläufig gemessen werden, sondern kann alternativ über eine Schätzung bzw. Berechnung ermittelt werden.

Die in Fig. 3 gezeigten Funktionsblöcke (d.h. nicht die Sensoren) sind in der Steuereinheit 22 vorzugsweise als Software implementiert, so dass die Steuereinheit 22 eine Rechnereinheit umfasst. Die Steuereinheit 22 ist bevorzugt integriert mit der Steuerung eines Antiblockiersystems oder eines elektronischen Bremssystems ausgebildet.

Nach alledem ermöglicht die Erfindung zuverlässige Gierraten bezogen auf den Fahrzeugrahmen zu ermitteln, obwohl die Gierratenmessung nicht am Fahrzeugrahmen, sondern in der Fahrerkabine stattfindet. Vorteilhafterweise wird hierzu auf bereits vorhandene Sensoren anderer Systemkomponenten bzw. Fahrerassistenzsysteme zurückgegriffen, wie beispielsweise eine oder mehrere Kameras eines Spurhalteassistenten oder von Radar- bzw. Lidardaten eines Abstandwarnsystems. Die Verfälschungen des Gierratensensors in der Fahrerkabine aufgrund von Kabinenbewegungen können erfindungsgemäß korrigiert werden, so dass eine Gierrate bezogen auf den Fahrzeugrahmen geschätzt bzw. berechnet werden kann. Somit ermöglicht die Erfindung die Kompensation von Kabinenbewegungen, wobei vorteilhafterweise das sog. Beobachtermodell verwendet wird.

## Patentansprüche

1. Einrichtung zur Regelung der Fahrdynamik eines Fahrzeugs (2) mit einer federnd gegenüber einem Rahmen (8) des Fahrzeugs (2) gelagerten Fahrerkabine (4), wobei die Einrichtung (30) Lenkwinkelsensormittel (20) zum Messen eines Lenkwinkels (γ), Gierratensensormittel (18) zum Messen einer Gierrate (SGRm) der Fahrerkabine (4), weitere Sensormittel (50) zum Ermitteln einer Auslenkung (α, β) der Fahrerkabine (4) aus einer Referenzposition und eine Steuereinheit (22) zur Auswertung der von den Sensormitteln (18, 20, 50) gelieferten Signale und zur Beeinflussung einer Bremsanlage und/oder eines Antriebs des Fahrzeugs (2) in Abhängigkeit von diesen Signalen aufweist, wobei wenigstens die Gierratensensormittel (18) in der Fahrerkabine (4) angeordnet sind,
**dadurch gekennzeichnet, dass** die Steuereinheit (22) derart ausgebildet ist, um eine Gierrate (GRe) des Fahrzeugsrahmens (8) in Abhängigkeit von der gemessenen Gierrate (SGRm) der Fahrerkabine (4) sowie der Auslenkung (α, β) der Fahrerkabine (4) aus ihrer Referenzposition zu schätzen bzw. zu berechnen, und eine Beeinflussung der Bremsanlage und/oder des Antriebs erfolgt, wenn die Differenz zwischen der geschätzten bzw. berechneten Gierrate (GRe) des Fahrzeugrahmens (8) und einer Soll-Gierrate (GRs), welche die Steuereinheit (22) wenigstens in Abhängigkeit von dem gemessenen Lenkwinkel (γ) und der auf den Fahrzeugrahmen (8) bezogene Fahrzeuggeschwindigkeit (vR) ermittelt, über einem vorgegebenen Grenzwert liegt.

2. Einrichtung nach Anspruch 1,
**dadurch gekennzeichnet, dass** die weiteren Sensormittel (50) Sensormittel wenigstens eines weiteren Steuer- oder Regelsystems des Fahrzeugs sind, das einer anderen Funktion als der Fahrdynamikregelung dient, wobei die weiteren Sensormittel (50) zusätzlich weitere Fahrzeug- und/oder Fahrzeugumgebungs- und/oder Fahrzeugbewegungsdaten und/oder -parameter erfassen.

3. Einrichtung nach Anspruch 1 oder 2,
**dadurch gekennzeichnet, dass** die weiteren Sensormittel (50) einen Ausschnitt der Umgebung eines Fahrzeugs von der Fahrerkabine (4) aus erfassen und die Steuereinheit (22) aus einer Veränderung des erfassten Ausschnitts die Auslenkung der Fahrerkabine ermittelt.

4. Einrichtung nach einem der vorhergehenden Ansprüche,
**dadurch gekennzeichnet, dass** die weiteren Sensormittel (50)
a) von einer starr mit der Fahrerkabine (4) verbundenen Position aus den Rahmen (8) oder einem starr mit dem Rahmen (8) verbundenen Aufbau (14) und/oder
b) von einer starr mit dem Rahmen (8) oder dem Aufbau (14) verbundenen Position aus die Fahrerkabine (4)
erfassen und die Steuereinheit (22) aus einer Veränderung einer Position eines erfassten Objekts (36) die Auslenkung (α, β) der Fahrerkabine (4) ermittelt.

5. Einrichtung nach einem der vorhergehenden Ansprüche,
**dadurch gekennzeichnet, dass** die weiteren Sensormittel (50) eine Beschleunigung (aR) des Fahrzeugs (2) am Rahmen (8) in Fahrtrichtung und/oder quer zur Fahrtrichtung erfassen und die Steuereinheit unter Berücksichtigung
a) dieser Beschleunigung (aR) und/oder des gemessenen Lenkwinkels (γ) sowie
b) der Masse (mK) der Fahrerkabine sowie
c) der Feder- und Dämpfungseigenschaften der federnden Lagerung der Fahrerkabine (4) am Rahmen (8)
die Auslenkung (α, β) der Fahrerkabine schätzen bzw. berechnen.

6. Einrichtung nach Anspruch 5, **gekennzeichnet durch** Sensoren zur Erfassung der Masse (mK) der Fahrerkabine.

7. Einrichtung nach Anspruch 5,
**dadurch gekennzeichnet, dass** die Steuereinheit (22) die Masse (mK) der Fahrerkabine (4) aus einer Abweichung einer Beschleunigung (aR) des Rahmens (8) und einer Beschleunigung (aK) der Fahrerkabine schätzt bzw. berechnet.

8. Einrichtung nach einem der vorhergehenden Ansprüche,
**dadurch gekennzeichnet, dass** die Gierratensensormittel (18) und die Steuereinheit (22) in einer gemeinsamen Baueinheit (24) und die weiteren Sensormittel (50) außerhalb der gemeinsamen Baueinheit (24) angeordnet sind.

9. Einrichtung nach einem der vorhergehenden Ansprüche,
**dadurch gekennzeichnet, dass** die Steuereinheit (22) einen Beobachter (38) umfasst, welcher die Gierrate (GRe) des Rahmens (8) in Abhängigkeit von dem Lenkwinkel (γ), der Fahrzeuggeschwindigkeit (vR) bezogen auf den Fahrzeugrahmen (8), der Auslenkung (α, β) der Fahrerkabine (4) aus ihrer Referenzposition und einem Schätzfehler (e) in Form der Differenz aus dem gemessenen Signal (SGRm) des Gierratensensormittels (18) und eines mittels eines mathematischen Modells (40) geschätzten bzw. berechneten, auf die Fahrerkabine (4) bezogenen Gierratensensorsignals (SGRe) schätzt bzw. berechnet.

10. Fahrzeug mit einer Einrichtung (30) nach einem der vorhergehenden Ansprüche.

11. Verfahren zum Regeln der Fahrdynamik eines Fahrzeugs (2) mit einer federnd gegenüber einem Rahmen (8) des Fahrzeugs (2) gelagerten Fahrerkabine (4) mit den Schritten:
- Messen eines Lenkwinkels (γ) mittels Lenkwinkelsensormitteln (20),
- Messen einer Gierrate (SGRm) der Fahrerkabine (4) mittels Gierratensensormitteln (18) in der Fahrerkabine (4),
- Ermitteln einer Auslenkung (α, β) der Fahrerkabine (4) aus einer Referenzposition mittels weiteren Sensormitteln (50),
- Auswerten der von den Sensormitteln (18, 20, 50) gelieferten Signalen in einer Steuereinheit (22),
- Beeinflussen einer Bremsanlage und/oder eines Antriebs des Fahrzeugs (2) in Abhängigkeit von diesen Signalen,
**dadurch gekennzeichnet, dass** mittels der Steuereinheit (22) eine Gierrate (GRe) des Rahmens (8) in Abhängigkeit von der gemessenen Gierrate (SGRm) der Fahrerkabine (4) sowie der Auslenkung (α, β) der Fahrerkabine (4) aus ihrer Referenzposition geschätzt bzw. berechnet wird und die Bremsanlage und/oder der Antrieb beeinflusst wird, wenn die Differenz zwischen der geschätzten bzw. berechneten Gierrate (GRe) des Rahmens (8) und einer Soll-Gierrate (GRs) abweicht, welche von der Steuereinheit (22) wenigstens in Abhängigkeit von dem gemessenen Lenkwinkel (γ) und der auf den Fahrzeugrahmen (8) bezogenen Fahrzeuggeschwindigkeit (vR) ermittelt wird, über einem vorgegebenen Grenzwert liegt.

## Claims

1. Device for regulating the driving dynamics of a vehicle (2) having a driver's cab (4) which is mounted resiliently with respect to a frame (8) of the vehicle (2), wherein the device (30) has steer angle sensor means (20) for measuring a steer angle (γ), yaw rate sensor means (18) for measuring a yaw rate (SGRm) of the driver's cab (4), further sensor means (50) for determining a deflection (α, β) of the driver's cab (4) out of a reference position, and a control unit (22) for evaluating the signals provided by the sensor means (18, 20, 50) and for influencing a brake system and/or a drive of the vehicle (2) as a function of said signals, wherein at least the yaw rate sensor means (18) are arranged in the driver's cab (4),
**characterized in that** the control unit (22) is designed to estimate and/or calculate a yaw rate (GRe) of the vehicle frame (8) as a function of the measured yaw rate (SGRm) of the driver's cab (4) and as a function of the deflection (α, β) of the driver's cab (4) out of its reference position, and influencing of the brake system and/or of the drive takes place if the difference between the estimated and/or calculated yaw rate (GRe) of the vehicle frame (8) and a setpoint yaw rate (GRs), which is determined by the control unit (22) at least as a function of the measured steer angle (γ) and the vehicle speed (vR) pertaining to the vehicle frame (8), lies above a predefined threshold value.

2. Device according to Claim 1,
**characterized in that** the further sensor means (50) are sensor means of at least one further control or regulation system of the vehicle which serves for some function other than driving dynamics regulation, wherein the further sensor means (50) additionally sense further vehicle and/or vehicle-environment and/or vehicle-movement data and/or parameters.

3. Device according to Claim 1 or 2,
**characterized in that** the further sensor means (50) sense a segment of the environment of a vehicle from the driver's cab (4) and the control unit (22) determines the deflection of the driver's cab from a change in the sensed segment.

4. Device according to one of the preceding claims, **characterized in that** the further sensor means (50)
a) sense the frame (8), or a superstructure (14) rigidly connected to the frame (8), from a position connected to the driver's cab (4), and/or
b) sense the driver's cab (4) from a position rigidly connected to the frame (8) or to the superstructure (14),
and the control unit (22) determines the deflection (α, β) of the driver's cab (4) from a change in a position of a sensed object (36).

5. Device according to one of the preceding claims, **characterized in that** the further sensor means (50) sense an acceleration (aR) of the vehicle (2) on the frame (8) in the direction of travel and/or transversely with respect to the direction of travel, and the control unit estimates and/or calculates the deflection (α, (3) of the driver's cab taking into consideration
a) said acceleration (aR) and/or the measured steer angle (γ) and
b) the mass (mK) of the driver's cab and
c) the spring and damping characteristics of the resilient mounting of the driver's cab (4) on the frame (8).

6. Device according to Claim 5, **characterized by** sensors for sensing the mass (mK) of the driver's cab.

7. Device according to Claim 5,
**characterized in that** the control unit (22) estimates and/or calculates the mass (mK) of the driver's cab (4) from a deviation between an acceleration (aR) of the frame (8) and an acceleration (aK) of the driver's cab.

8. Device according to one of the preceding claims, **characterized in that** the yaw rate sensor means (18) and the control unit (22) are arranged in a common structural unit (24) and the further sensor means (50) are arranged outside the common structural unit (24).

9. Device according to one of the preceding claims, **characterized in that** the control unit (22) comprises an observer (38) which estimates and/or calculates the yaw rate (GRe) of the frame (8) as a function of the steer angle (γ), the vehicle speed (vR) pertaining to the vehicle frame (8), the deflection (α, β) of the driver's cab (4) out of its reference position and an estimation error (e) in the form of the difference between the measured signal (SGRm) of the yaw rate sensor means (18) and a yaw rate sensor signal (SGRe) which pertains to the driver's cab (4) and which is estimated and/or calculated by means of a mathematical model (40).

10. Vehicle having a device (30) according to one of the preceding claims.

11. Method for regulating the driving dynamics of a vehicle (2) having a driver's cab (4) which is mounted resiliently with respect to a frame (8) of the vehicle (2), having the steps:
- measuring a steer angle (γ) by way of steer angle sensor means (20),
- measuring a yaw rate (SGRm) of the driver's cab (4) by way of yaw rate sensor means (18) in the driver's cab (4),
- determining a deflection (α, β) of the driver's cab (4) out of a reference position by way of further sensor means (50),
- evaluating the signals provided by the sensor means (18, 20, 50) in a control unit (22),
- and influencing a brake system and/or a drive of the vehicle (2) as a function of said signals, **characterized in that**, by means of the control unit (22), a yaw rate (GRe) of the vehicle frame (8) is estimated and/or calculated as a function of the measured yaw rate (SGRm) of the driver's cab (4) and as a function of the deflection (α, β) of the driver's cab (4) out of its reference position, and the brake system and/or the drive is influenced if the difference between the estimated and/or calculated yaw rate (GRe) of the frame (8) and a setpoint yaw rate (GRs), which is determined by the control unit (22) at least as a function of the measured steer angle (γ) and the vehicle speed (vR) pertaining to the vehicle frame (8), lies above a predefined threshold value.

## Revendications

1. Dispositif de régulation de la dynamique de roulage d'un véhicule (2) qui présente une cabine (4) de conducteur montée élastiquement par rapport à un châssis (8) du véhicule (2), le dispositif (30) présentant des moyens (20) de capteur d'angle de braquage qui mesurent un angle de braquage (γ), des moyens (18) de capteur de vitesse de lacet qui mesurent un taux de lacet (SGRm.) de la cabine (4) du conducteur, d'autres moyens (50) de capteur qui déterminent la déviation (α, β) de la cabine (4) du conducteur par rapport à une position de référence et une unité de commande (22) qui évalue les signaux délivrés par les moyens (18, 20, 50) de capteur et qui agit sur une installation de freinage et/ou sur un entraînement du véhicule (2) en fonction de ces signaux, au moins les moyens (18) de capteur de vitesse de lacet étant disposés dans la cabine (4) du conducteur,
**caractérisé en.ce que**
l'unité de commande (22) est configurée pour estimer ou pour calculer une vitesse de lacet (GRe) du bâti (8) du véhicule en fonction de la vitesse de lacet (SGRm) de la cabine (4) du conducteur qui a été mesurée ainsi que l'écart (α, β) de la cabine (4) du conducteur par rapport à sa position de référence et
**en ce qu'**une action sur l'installation de freinage et/ou sur l'entraînement a lieu si la différence entre la vitesse de lacet (GRe) estimée ou calculée du châssis (8) du véhicule et une vitesse de lacet de consigne (GRs) que l'unité de commande (22) détermine au moins en fonction de l'angle de braquage (γ) qui été mesuré et de la vitesse (vR) du véhicule rapportée au châssis (8) du véhicule est située au-dessus d'une valeur limite prédéterminée.

2. Dispositif selon la revendication 1, **caractérisé en ce que** les autres moyens (50) de capteur sont des moyens de capteur d'au moins un autre système de commande ou de régulation du véhicule qui assure une fonction autre que la régulation de la dynamique de roulage, les autres moyens (50) de capteur saisissant en supplément d'autres données et/ou paramètres du véhicule, de l'environnement du véhicule et/ou du déplacement du véhicule.

3. Dispositif selon les revendications 1 ou 2, **caractérisé en ce que** les autres moyens (50) de capteur saisissent une partie de l'environnement d'un véhicule depuis la cabine (4) du conducteur et **en ce que** l'unité de commande (22) détermine la déviation de la cabine du conducteur à partir d'une modification de la partie saisie.

4. Dispositif selon l'une des revendications précédentes, **caractérisé en ce que** les autres moyens de capteur (50) saisissent
a) à partir d'une position reliée rigidement à la cabine (4) du conducteur, à partir du châssis (8) ou d'une structure (14) reliée rigidement au châssis (8) et/ou
b) à partir d'une position depuis la cabine (4) du conducteur, reliée rigidement au châssis (8) ou à la structure (14), et
**en ce que** l'unité de commande (22) détermine la déviation (α, P) de la cabine (4) du conducteur à partir d'une modification d'une position d'un objet (36) qui a été saisi.

5. Dispositif selon l'une des revendications précédentes, **caractérisé en ce que** les autres moyens (50) de capteur saisissent une accélération (aR) du véhicule (2) du châssis (8) dans la direction de déplacement et/ou dans la direction transversale au déplacement et **en ce que** l'unité de commande estime ou calcule la déviation (α, β) de la cabine du conducteur en tenant compte
a) de cette accélération (aR) et/ou de l'angle de braquage (γ) qui a été mesuré,
b) de la masse (mK) de la cabine du conducteur ainsi que
c) des propriétés élastiques et d'amortissement du montage élastique de la cabine (4) du conducteur sur le châssis (8).

6. Dispositif selon la revendication 5, **caractérisé par** des capteurs qui saisissent la masse (mK) de la cabine du conducteur.

7. Dispositif selon la revendication 5, **caractérisé en ce que** l'unité de commande (22) estime ou calcule la masse (mK) de la cabine (4) du conducteur à partir d'un écart entre une accélération (aR) du châssis (8) et une accélération (aK) de la cabine du conducteur.

8. Dispositif selon l'une des revendications précédentes, **caractérisé en ce que** les moyens (18) de capteur de vitesse de lacet et l'unité de commande (22) sont disposés dans un module commun (24) et **en ce que** les autres moyens (50) de capteur sont disposés à l'extérieur du module commun (24).

9. Dispositif selon l'une des revendications précédentes, **caractérisé en ce que** l'unité de commande (22) comporte un observateur (38) qui estime ou calcule la vitesse de lacet (GRe) du châssis (8) en fonction de l'angle de braquage (γ), de la vitesse (vR) du véhicule rapportée au châssis (8) du véhicule, de la déviation (α, P) de la cabine (4) du conducteur par rapport à la position de référence et d'une erreur d'estimation (e) qui présente la forme de la différence entre le signal (SGRm) qui a été mesuré par les moyens (18) de capteur de vitesse de lacet et un signal (SGRe) de capteur de vitesse de lacet estimé ou calculé au moyen d'un modèle mathématique (40) et rapporté à la cabine (4) du conducteur.

10. Véhicule doté d'un dispositif (30) selon l'une des revendications précédentes.

11. Procédé de régulation de la dynamique de roulage d'un véhicule (2) qui présente une cabine (4) de conducteur montée élastiquement par rapport à un châssis (8) du véhicule (2), le procédé présentant les étapes suivantes :
mesure d'un angle de braquage (γ) au moyen du moyen (20) de capteur d'angle de braquage,
mesure d'une vitesse de lacet (SGRm) de la cabine (4) du conducteur au moyen du moyen (18) de capteur de vitesse de lacet prévu dans la cabine (4) du conducteur,
détermination d'une déviation (α, β) de la cabine (4) du conducteur par rapport à une position de référence, au moyen d'autres moyens (50) de capteur,
évaluation dans une unité de commande (22) des signaux délivrés par les moyens (18, 20, 50) de capteur,
action sur une installation de freinage et/ou sur un entraînement du véhicule (2) en fonction de ces signaux,
**caractérisé en ce que**
une vitesse de lacet (GRe) du châssis (8) est estimée ou calculée au moyen de l'unité de commande (22) en fonction de la vitesse de lacet (SGRm) de la cabine (4) du conducteur qui a été mesurée ainsi que de la déviation (α, β) de la cabine (4) du conducteur par rapport à sa position de référence et
**en ce qu'**une action est exercée sur l'installation de freinage et/ou sur l'entraînement si la différence entre la vitesse de lacet (GRe) estimée ou calculée du châssis (8) et une vitesse de lacet de consigne (GRs) rapportée au châssis (8) du véhicule, qui est déterminée par l'unité de commande (22) au moins en fonction de l'angle de braquage (γ) qui a été mesuré et de la vitesse (vR) du véhicule, est située au-delà d'une valeur limite prédéterminée.
